# EUROPEAN PATENT APPLICATION

(11) **EP 1 175 823 A1**
(43) Date of publication of application: **30.01.2002**
(21) Application number: 01202739.7
(22) Date of filing: 18.07.2001
(51) Int. Cl.: A01D 46/26

(54) **Implement for causing fruit to fall from tree branches**

(30) Priority: 26.07.2000 IT RE000073
(71) Applicant: Paterlini, Remo, 42018 San Martino in Rio (Reggio Emilia) (IT)
(72) Inventor: Paterlini, Remo, 42018 San Martino in Rio (Reggio Emilia) (IT)
(74) Representative: Corradini, Corrado

(57) **Abstract**

The implement comprises at least one shaker member (20) oscillating by the operation of a drive means (12), comprising a support element (21) to which a plurality of prongs (22) are rigidly fixed to lie roughly on one and the same ideal lying surface, and a support means (11) to be gripped by the operator and carrying at its upper end the shaker member (20), such that this member (20) can be brought into operation at heights greater than two metres. The median direction (D, D') of oscillation of each said shaker member (20) is virtually coplanar with said ideal lying surface of the prongs (22) and virtually perpendicular to the axes of the prongs (22); in addition, the prongs (22) are distributed at a distance apart such that this distance has a component in the median direction of oscillation (D, D') which is greater than the diameter of the branches carrying the fruit, and are able to penetrate between the leafy growth of the tree.

## Description

This invention relates to an implement (so-called "beater") for causing fruit (olives, almonds, walnuts, hazel nuts, coffee berries and others) to fall from the leafy growth of trees, in particular fruit situated at medium and large heights, i.e. from one metre upwards.

Motorized beaters are known comprising a support means (a rod) to be gripped by the operator, and one or preferably two members which oscillate by the action of a drive means (a compressed air actuator, an electric motor or an internal combustion engine) carried by the support means.

Said oscillating members are in the form of mutually facing, opposing flat combs which oscillate symmetrically about two horizontal axes of rotation which are parallel to each other, each lying in the plane defined by the prongs.

The combs oscillate by symmetrically approaching and withdrawing from each other to strike the leafy growth in order to detach the fruit from it by a beating action, and also produce an action which rakes the fruit to cause it to fall.

An object of this invention is to improve the performance of known implements, in particular with regard to their hourly production capacity, and in addition to cause the fruit to undergo little damage and to fall in proximity to the operator instead of dispersed at a distance.

This and further objects are attained by the invention as characterised in the claims.

The invention is described in detail hereinafter with the aid of the accompanying figures, which illustrate two embodiments thereof by way of non-limiting example.

Figure 1 is a schematic overall view of the implement 10 in operation.

Figure 2 is a perspective view of the upper part of one embodiment of the implement 10 of Figure 1.

Figure 3 is a vertical front elevation of Figure 2, in which the shaker members 20 are shown by full lines in one end position and by dashed lines in the other end position.

Figure 4 is a profile view in the direction IV of Figure 3.

Figure 5 is a partly sectional vertical front elevation of a second embodiment of the invention, in which the shaker members 20 are shown by full lines in one end position and by dashed lines in the other end position.

Figure 6 is a profile view in the direction VI of Figure 5.

The implement 10 of the invention comprises at least shaker member 20 which oscillates by the action of a drive means 12.

Each shaker member 20 comprises a support element 21 and a plurality of prongs 22 rigidly fixed to the element 21. The prongs 22 of each member 20 lie on the same *ideal lying surface,* which is virtually flat or slightly cylindrical/frusto-conical (with a large radius of curvature); this means that it is possible to identify said *ideal lying surface* on which the prong axes lie, or from which the prong axes are spaced by a distance which is small relative to the maximum distance between them; in addition some of the prongs (as explained for example hereinafter) can deviate from said *ideal lying surface.*

The shaker member can be brought to operate at heights greater than two metres by a support means, typically a possibly telescopic support rod 11 of longitudinal axis N, which is gripped by the operator and at its upper end carries the shaker member.

In the preferred embodiment, shown in the figures, the implement 10 comprises two shaker members 20. However, the implement 10 can equally comprise a single shaker member 20, or more than two shaker members 20.

The shaker member 20 is oscillated by a drive means 12.

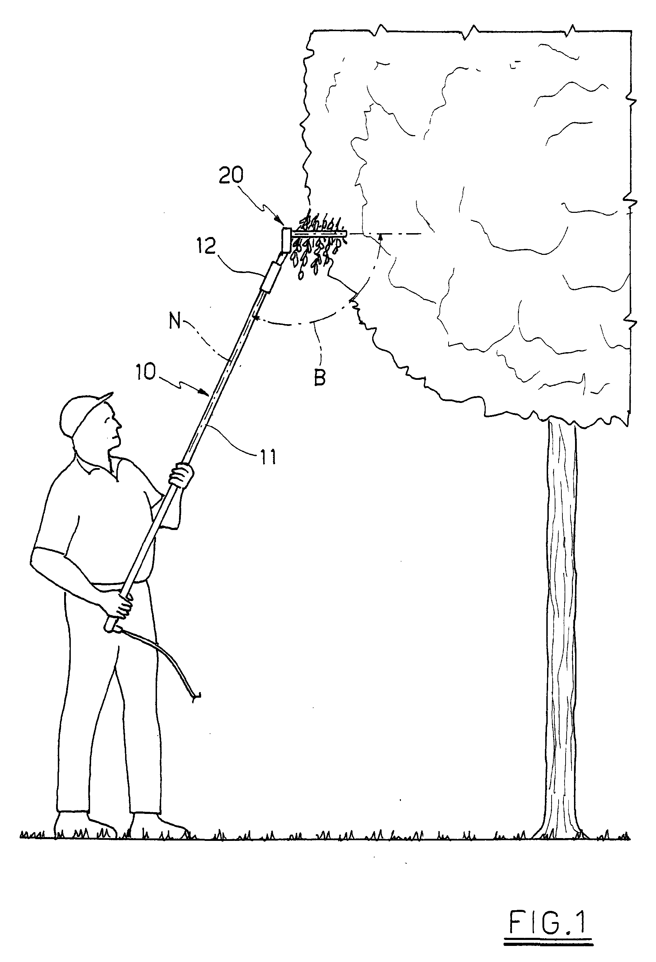

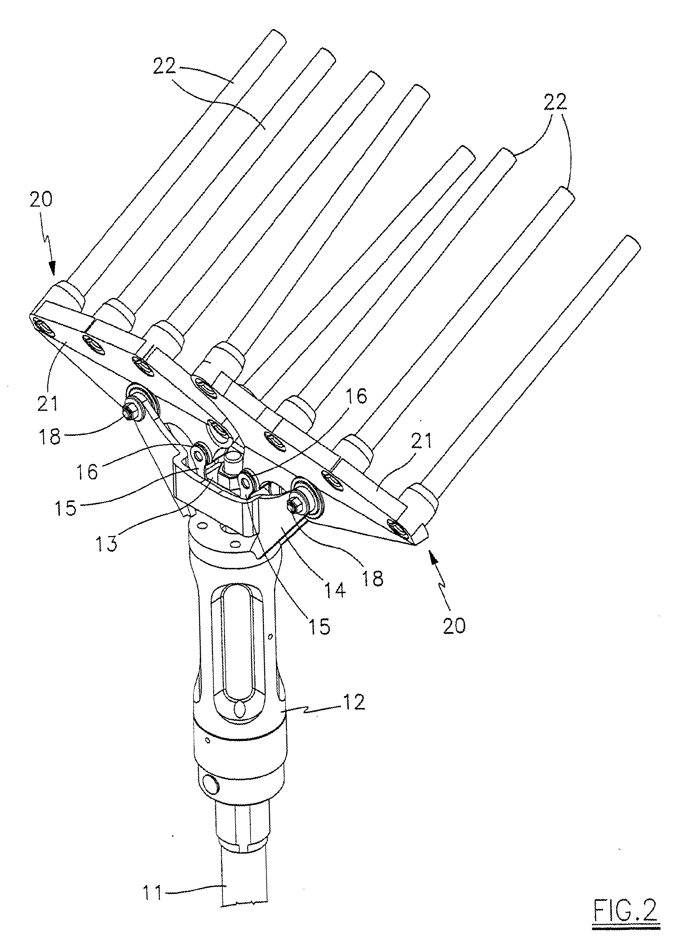

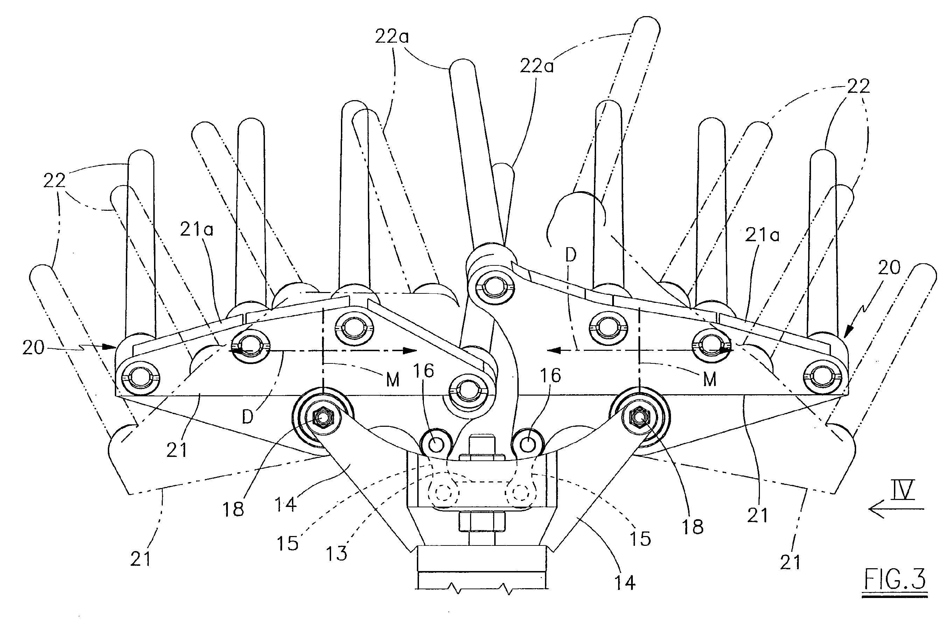

In the embodiment shown in Figures 1-4, the drive means 12 is fixed to the upper end of the rod 11; in particular it consists of a fluid-operated reciprocating actuator which produces a reciprocating movement in the direction of the axis of the rod 11. More precisely, to the upper end of the drive means 12 there is fixed a fork 14 to which the two shaker members 20 are hinged by respective pins 18 having their axes of rotation R parallel and side by side.

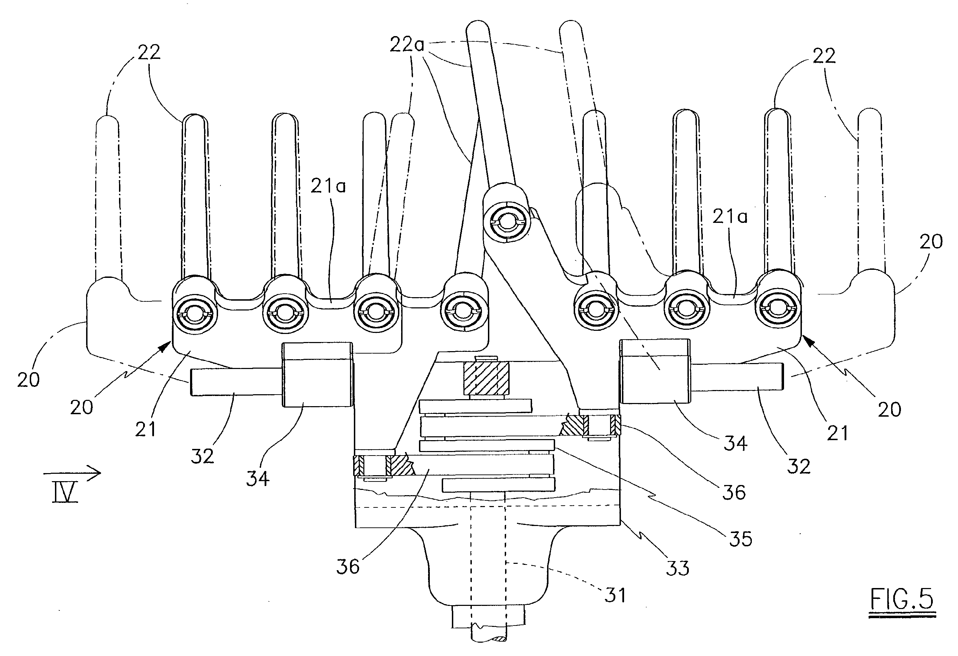

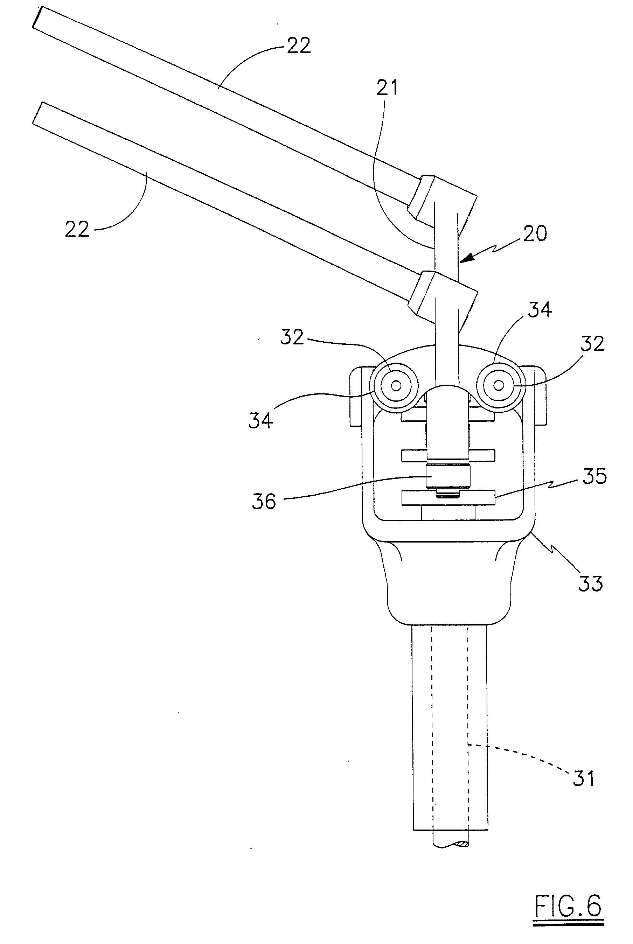

Alternatively, as shown in Figures 5 and 6, the drive means can comprise an internal combustion engine (or an electric or other motor) which, for example, rotates a shaft 31 coaxial to the rod 11. The drive means 12 can also be positioned at the upper end of the rod 11 (as shown in Figures 1-4) or can be positioned at the lower end of the rod 11, or indeed can be not rigid with the rod 11.

According to the invention, each member 20 moves with reciprocating oscillatory movement by virtue of the drive means 12, this movement possessing a *median* direction. In particular, with reference to the embodiment shown in Figures 1-4, each support element 21 rotates with oscillatory movement (for example through an angle of 20-30 degrees, as in the example shown in the figures), relative to the support rod 11 about the respective axis R. In this case the direction of oscillation varies from one point to another of the element 21; for example, the oscillation of the prongs 22 positioned at the outer ends of the elements 21 is virtually vertical, whereas the oscillation of the intermediate prongs is virtually horizontal. However, a *median direction* (indicated by D in the figures) of oscillation can be determined, characteristic of the entire member 20, which is defined by the average direction of the points positioned on the median line M of the support element 21 (i.e. the line equidistant from the two outer ends of the element 21).

According to the invention, said median direction D of oscillation of each shaker member 20 is virtually coplanar with the ideal lying surface of the prongs 22. In addition, the prongs 22 of each oscillating member 20 have their axes virtually parallel to each other (or slightly diverging) and perpendicular or nearly perpendicular to said median direction D of oscillation.

When the implement 10 is in its usual working position, said median direction D is virtually horizontal.

The term "usual working position" means the position in which the implement is held at most points of the tree foliage, to cause most of the fruit to fall from the tree (at least 60% of this fruit); the implement can however assume different positions.

The prongs 22 of each shaker member 20 are distributed at a distance apart such that this distance has a component in the *median direction* D of oscillation (i.e. such that the ideal straight line which defines their distance apart is parallel to the horizontal direction or has a component along this direction D), said component being greater than the diameter of the branches carrying the fruit. The distribution of the prongs 22 is such as to enable them to penetrate between the leafy growth in such a manner that at least one fruit-carrying branch remains between each pair of prongs 22.

In particular, each support element 21 preferably has a substantially flat shape and possesses an upper edge 21a, to which the ends of the prongs 22 are fixed and which roughly defines a line segment which approaches a segment of a straight line, including in that term a large-radius arc, which is virtually parallel to the *median direction D* of oscillation of the shaker member 20 and lies at a distance from the axis R of rotation. In addition, the outer ends of said edge 21a are positioned virtually at the same distance from the axis of rotation R.

Preferably, two shaker members 20 are provided side by side at a distance from each other, they having virtually the same median direction D of oscillation; specifically, they oscillate in a mutually symmetrical manner about respective axes R spaced apart and parallel or virtually parallel. The planes in which the prongs 22 of the two shaker members 20 lie are close together or coincident. Said arcs or segments defined by the edges 21a of the two support elements 21, to which the ends of the prongs 22 are fixed, are positioned virtually on one and the same line or on two lines close together, parallel to the *median direction* D of oscillation. The two members 20 are close together to the extent that, during oscillation, the trajectories of the two closest-together end prongs 22a interfere with each other; consequently, said two prongs 22a are positioned at a distance one below and the other above said common surface, to prevent them colliding during oscillation.

In the embodiment shown in Figures 1-4, the drive means 12 drives, with reciprocating movement in the direction of the axis N of the rod 11, a slide block 13 connected to each element 21 by a respective connecting rod 15 pivoted to a point (pin 16) on the element 21 at a distance from the axis of rotation R.

The axes R are preferably perpendicular to the axis N.

By means of the connecting rods 15, the axial reciprocating movement of the slide block 13 induces an oscillatory movement in the shaker members 20 such that the average oscillation of points on the median line M of the support element 21 (which in this description is called the *"median direction"* D) has the aforesaid characteristics.

In relation to the oscillation of the shaker member 20, it should be noted that those prongs 22 lying closest to the outer end positions of each support element 21 are at a greater distance from the axis of rotation R than those prongs 22 lying in an intermediate position; said greater distance increases the amplitude of the oscillation and hence also its component in the direction parallel to the *median direction D* and at least partly compensates for the decrease in this component at the end points because of the direction of oscillation.

The amplitude of the oscillation of each shaker member 20 is equal to or greater than the angular distance between two adjacent prongs 22, so that any branch which becomes interposed between two adjacent prongs 22 is certain to be struck by at least one of the two prongs.

The preferred overall geometry of the implement 10 is such that the *ideal lying surface* of the prongs 22 forms an angle B (see Figure 1 in particular) with the longitudinal axis N of the support rod such that, when in its usual working position at a medium-large height (beyond two metres), said surface is virtually horizontal or forms a small angle with the horizontal plane. In particular, said angle B between the *ideal lying surface* of the prongs 22 and the axis N of the support rod lies between 30 and 150 degrees.

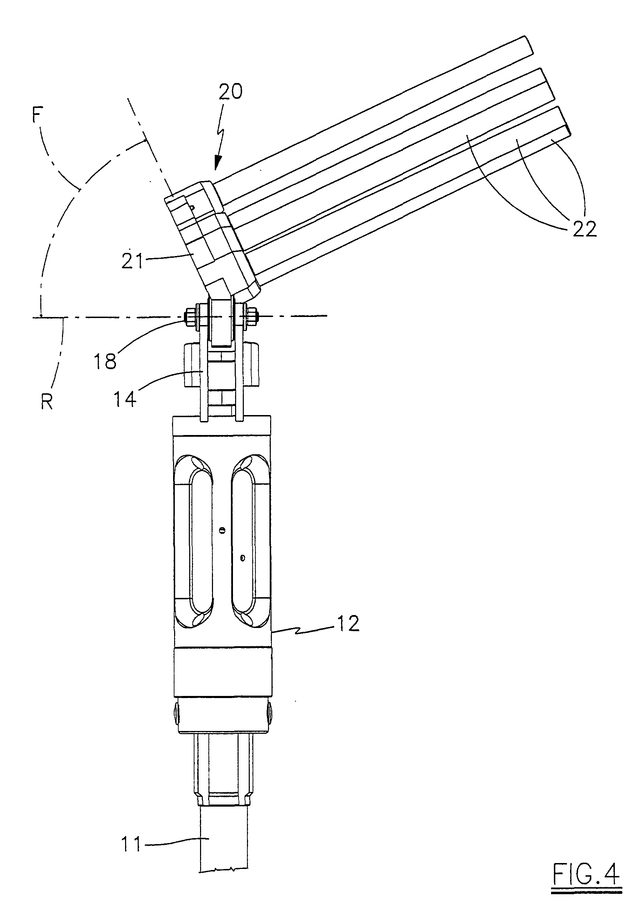

Moreover, in the embodiment shown in Figures 1-4, the entire support element 21 defines a plane perpendicular to the axes of the prongs 22, this plane forming, in profile, an acute angle F with the direction of the axes R of rotation which is preferably greater than 20 degrees (see Figure 4 in particular).

When in its usual working position, the implement is held typically such that the *median direction* D of oscillation of each shaker member 20 is virtually horizontal, and in many cases also virtually perpendicular to the vertical plane defined by the main axis of the shaft and by the support means 11; the operator works by bringing the prongs 22 into a horizontal position and making them penetrate between the leafy growth, so that the (more or less) thick branches carrying the fruit remain inserted between the prongs; at this point, the oscillation which the shaker members 20 undergo causes the branches to be shaken in a roughly horizontal direction; in particular, the branches are shaken firstly in one direction, thrust by one prong 22, then in the opposite direction, thrust by the adjacent prong 22; the result of this is an effective detachment of the fruit by kinetic energy, even if the fruit is not directly contacted by the prongs.

In addition to being particularly effective in terms of its capacity to detach the fruit from its branches, this action is also very advantageous in that as it does not act directly on the fruit, but on the branches, it causes the fruit to fall in the vertically underlying region without propelling it outwards, and also produces a smooth detachment of the fruit without damaging its integrity.

The described geometrical arrangement of the *median direction* D of oscillation of the members 20 is important because the branches carrying the fruit lie substantially in vertical planes in proximity to the fruit, and are hence intercepted effectively by the movement of the prongs 22.

The overall geometry of the implement 10 is such that when the operator is in his usual working position, although remaining a short distance from the vertical line passing through the leafy growth on which the prongs 22 act in order not to be struck by the falling fruit, he is able to insert the prongs 22 between the leafy growth in a virtually horizontal direction (see Figure 1 in particular).

The implement 10 can also be held in a position different from the aforedescribed *usual working position,* for example for particular regions of the tree or for particular operations; for example it can be held with the prongs 22 inverted, facing more or less vertically upwards.

In one embodiment, the prongs have a length of 20 cm and a diameter of 12 mm, their distance apart on the member 20 varying from 40 to 44 mm.

Figures 5 and 6 show a second embodiment which differs from the aforedescribed first embodiment in that the oscillatory movement of the shaker members 20 is achieved not by rotation about the axis R, but by a reciprocating translational movement in the same direction (here indicated by D'). In this case, both the *median direction* and that of all other points is the said translational direction D'. In detail, the implement 10 comprises two shaker members 20, the support elements 21 of which translate along two pairs of guide columns 32 rigidly fixed to a support member 33 which is itself rigidly fixed to the upper end of the rod 11. The elements 21 are coupled prismatically to the respective pairs of columns 32 by means of slide bushes 34. The members 34 translate along the pairs of columns 32, each of which defines a direction D' of translation of the relative member 20, these directions D' being coincident and perpendicular to the axis N of the rod 11 and passing through the axis N itself.

The two members 20 are made to translate with reciprocating movement along the direction D' in a mutually opposing symmetrical manner by an internal combustion engine (not shown in the figures) either positioned at the lower end of the rod 11 or not rigidly connected to the rod 11, to rotate a shaft 31 coaxial to the rod 11.

In the interior of the member 33, the upper end of the shaft 31 is joined to a double crank 35 operating two connecting rods 36, which move a respective support element 21 in the direction D' with reciprocating movement.

Numerous modifications of a practical and applicational nature can be made to the invention, but without leaving the scope of the inventive idea as claimed below.

## Claims

1. An implement to cause fruit to fall from the leafy growth of trees, comprising:
at least one shaker member (20) oscillating by the operation of a drive means (12), comprising a support element (21) to which a plurality of prongs (22) are rigidly fixed to lie roughly on one and the same *ideal lying surface,*
and a support means (11) to be gripped by the operator and
carrying at its upper end the shaker member (20), such that this member (20) can be brought into operation at heights greater than two metres,
**characterised in that**:
the *median direction* (D, D') of oscillation of each said shaker member (20) is virtually coplanar with said *ideal lying surface* of the prongs (22) and virtually perpendicular to the axes of the prongs (22),
the prongs (22) being distributed at a distance apart such that this distance has a component in the *median direction* of oscillation (D, D') which is greater than the diameter of the branches carrying the fruit, and being able to penetrate between the leafy growth of the tree.

2. An implement as claimed in claim 1, **characterised in that** when the implement is in its usual working position, the *median direction* (D, D') of oscillation of each said shaker member (20) is virtually horizontal.

3. An implement as claimed in claim 1, **characterised in that** said support means (11) has a longitudinal axis (N), the *ideal* *lying surface* of the prongs (22) forming an angle (B) with the longitudinal axis (N) of the support means (11) such that, when in its usual working position at a medium-large height, it is virtually horizontal or forms a small angle with the horizontal plane.

4. An implement as claimed in claim 3, **characterised in that** said angle (B) between the *ideal lying surface* of the prongs and the axis (N) of the support means (11) lies between 30 and 150 degrees.

5. An implement as claimed in claim 1, **characterised in that** when in its usual working position, the *median direction* (D, D') of oscillation of each said shaker member (20) is virtually perpendicular to the vertical plane defined by the main axis of the shaft and by the support means (11).

6. An implement as claimed in claim 1, **characterised in that** the amplitude of the oscillation of the shaker member (20) is equal to or greater than the angular distance between two adjacent prongs (22).

7. An implement as claimed in claim 1, **characterised in that** each said shaker member (20) oscillates by rotation about an axis (R), the relative support element (21) defining roughly a segment of a straight line/arc, to which the ends of the prongs (22) are fixed, which is virtually parallel to the *median direction (D)* of oscillation of the shaker member (20) and lies at a distance from said axis (R) of rotation.

8. An implement as claimed in claim 7, **characterised in that** the support element (21) defines a plane perpendicular to the axes of the prongs (22), this plane forming an acute angle F greater than 20 degrees with the direction of the axes R of rotation.

9. An implement as claimed in claim 7, **characterised in that** those prongs (22) lying closest to the outer end positions of each support element (21) are at a greater distance from the axis of rotation (R) than those prongs (22) lying in an intermediate position.

10. An implement as claimed in claim 7, **characterised in that** the axis of rotation (R) of each shaker member (20), when in its usual working position at a medium-large height, forms a small angle with the horizontal plane and with the axis of the prongs (22).

11. An implement as claimed in claim 1, **characterised by** comprising two shaker members (20) oscillating in mutually symmetrical manner.

12. An implement as claimed in claim 11, **characterised in that** the two shaker members (20) are positioned side by side at a distance from each other, they having virtually the same *median direction* of oscillation, the relative planes in which their prongs (20) lie being close to each other or coincident.

13. An implement as claimed in claim 1, **characterised in that** the oscillation movement of the shaker members (20) is achieved by a reciprocating translational movement.

14. An implement as claimed in claim 13, **characterised by** comprising:
two shaker members (20), the support elements (21) of which translate, with prismatic coupling, along two pairs of guide columns (32) rigidly fixed to a support member (33) which is itself rigidly fixed to the upper end of the rod (11), each pair of columns (32) defining a direction (D') of translation of the relative member (20), these directions (D') being coincident and
perpendicular to the axis (N) of the rod (11) and passing through the axis of the rod (11),
a rotary shaft (31), coaxial to the rod (11), to which there is joined a double crank (35) operating two connecting rods (36), which move a respective support element (21) in the direction D' with reciprocating movement.

15. An implement as claimed in claim 11, **characterised in that** the two members (20) are close together to the extent that, during oscillation, the trajectories of the two closest-together end prongs (22a) interfere with each other.
